(19) Europäisches Patentamt
European Patent Office
Office européen des brevets

(11) **EP 3 888 240 B1**

(12) **FASCICULE DE BREVET EUROPEEN**

(45) Date de publication et mention
de la délivrance du brevet:
**26.03.2025 Bulletin 2025/13**

(21) Numéro de dépôt: **19805351.4**

(22) Date de dépôt: **22.11.2019**

(51) Classification Internationale des Brevets (IPC):
**H02P 23/00** *(2016.01)*     **H02P 6/10** *(2006.01)*

(52) Classification Coopérative des Brevets (CPC):
**H02P 6/10; H02P 23/0027; H02P 23/009**

(86) Numéro de dépôt international:
**PCT/EP2019/082319**

(87) Numéro de publication internationale:
**WO 2020/109185 (04.06.2020 Gazette 2020/23)**

(54) **PROCÉDÉ DE COMMANDE ET SYSTEME DE COMMANDE ASSOCIÉ**

STEUERUNGMETHODE UND ZUGEHÖRIGES STEUERUNGSYSTEM

COMMAND METHOD AND ASSOCIATED COMMAND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2018 FR 1872188**

(43) Date de publication de la demande:
**06.10.2021 Bulletin 2021/40**

(73) Titulaire: **IFP Energies nouvelles**
**92852 Rueil-Malmaison (FR)**

(72) Inventeurs:
• **KUENTZMANN, Emmanuel**
**92852 RUEIL-MALMAISON CEDEX (FR)**
• **VIDAL-NAQUET, Fabien**
**92852 RUEIL-MALMAISON CEDEX (FR)**
• **DIB, Wissam**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 1 868 288     EP-B1- 1 868 288
WO-A1-03/084049     FR-A1- 2 994 355
FR-A1- 3 012 270     FR-A1- 3 051 296
US-A1- 2016 359 442

**Description**

## DOMAINE TECHNIQUE

La présente invention concerne un procédé de commande d'une machine tournante triphasée synchro-réluctante ou synchrone à aimants permanents.

L'invention concerne également un système de commande

L'invention s'applique au domaine de la commande des machines tournantes, en particulier la commande des machines synchrones à aimants permanents et des machines synchro-réluctantes.

## ÉTAT DE LA TECHNIQUE ANTÉRIEURE

Il est connu d'avoir recours à des machines tournantes telles que des machines synchrones à aimants permanents ou des machines synchro-réluctantes, en particulier des machines synchro-réluctantes assistées d'aimants permanents. De telles machines tournantes sont, par exemple, utilisées dans le domaine de la propulsion, par exemple pour la génération de couples moteurs à bord d'un véhicule tel qu'une automobile.

Le document FR 3 051 296 A1 décrit, par exemple, une machine synchro-réluctante assistée d'aimants permanents

De telles machines tournantes sont avantageuses dans la mesure où, lorsqu'un régime dit « de saturation de tension » est atteint, il est encore possible d'accroître la vitesse de rotation du rotor de la machine tout en limitant significativement la décroissance du couple mécanique fourni par la machine tournante, et ce en réalisant une opération appelée « défluxage ». Une telle décroissance du couple mécanique fourni par la machine tournante, lorsque la vitesse de rotation est augmentée, est un phénomène indésirable courant se produisant lorsqu'un tel défluxage n'est pas mis en œuvre.

Par « régime de saturation de tension », il est entendu, au sens de la présente invention, une situation dans laquelle tension appliquée aux bornes de la machine tournante devient égale à une tension maximale disponible, dont la valeur dépend de l'installation électrique à laquelle la machine tournante est raccordée, de sorte qu'il n'est plus possible d'augmenter la tension d'alimentation de la machine tournante.

En outre, par « défluxage », il est entendu, au sens de la présente invention, un procédé de commande d'une telle machine tournante, comprenant une injection de courant au niveau des phases, c'est-à-dire des enroulements, du stator de la machine tournante afin de compenser, au moins en partie, le champ magnétique généré par les aimants du rotor de ladite machine tournante.

Un tel procédé de commande comprend généralement le calcul de courants et de tensions dits « directs » et « en quadrature », qui sont des courants et tensions virtuels exprimés dans un repère tournant lié au rotor, et la mise en œuvre de deux asservissements, l'un portant sur les grandeurs dites directes, et l'autre portant sur les grandeurs dites « en quadrature », afin de déterminer les tensions à appliquer à chaque phase de la machine tournante.

Les machines tournantes évoquées ci-dessus étant synchrones, la mise en œuvre du défluxage implique une synchronisation entre les champs magnétiques tournants du stator et du rotor. L'angle formé entre les directions respectives du champ magnétique des aimants du rotor et des courants exprimés dans le repère tournant lié au rotor est appelé « angle de défluxage ».

Le défluxage consiste donc à générer un champ magnétique induit par les courants au stator pour compenser, au moins en partie, l'effet du champ magnétique du rotor, et ce dans le but de réduire la tension aux bornes de la machine tournante. De cette façon, la machine tournante est apte à absorber plus de courant, et donc à fournir un couple mécanique plus important au même régime, que lorsqu'un tel défluxage n'a pas lieu. Un tel défluxage est donc avantageux, dans la mesure où il limite la perte de couple mécanique produit par la machine tournante et accroît la vitesse de rotation du rotor à une valeur de couple donnée, et ce sans que la tension aux bornes de la machine tournante ne dépasse la tension maximale. Ainsi, même dans le régime de saturation de tension, la puissance consommée par la machine tournante est maintenue égale à une puissance plus élevée qu'en l'absence de défluxage, ce qui se traduit par de meilleures prestations.

Notamment, les machines synchro-réluctantes ont des capacités de défluxage importantes, ce qui permet de bénéficier d'une grande partie de leur puissance jusqu'à leur vitesse maximale.

Toutefois, un tel procédé de commande ne donne pas entière satisfaction.

En effet, dans un procédé de commande classique tel que décrit précédemment, le rendement de la machine électrique n'est pas satisfaisant.

Ceci provient notamment du fait que, dans un tel procédé de commande usuel, la tension maximale disponible n'est pas appliquée aux bornes de la machine tournante. Ceci est dû au fait que, si la tension appliquée à la machine électrique venait à être maximale, seule la phase de ladite tension serait un degré de liberté pour la commande de la machine tournante, ce qui poserait des soucis de stabilité.

Il en résulte que, dans un procédé de commande classique tel que décrit précédemment, il est généralement fait le choix d'appliquer, à la machine tournante, une tension inférieure à la tension maximale disponible, et ce afin de bénéficier de deux degrés de liberté pour la commande (phase de la tension et norme de la tension appliquée aux bornes de la machine tournante).

Un tel choix se fait au détriment du rendement de la machine tournante.

Les demandes de brevet FR 2994355 A1, WO 03/084049 A1, EP 1868288 A1, US 2016/0359442 A1, FR 3012270 A1, décrivent différents systèmes de commande du couple électromagnétique d'une machine électrique.

Un but de l'invention est donc de proposer un procédé de commande qui entraîne une dégradation moindre du rendement de la machine tournante, notamment lors du défluxage, tout en réduisant l'instabilité du couple mécanique délivré lors dudit défluxage, et en autorisant une utilisation maximale de la tension disponible.

L'invention est définie par les revendications jointes. A cet effet, l'invention a pour objet un procédé du type précité, comportant les étapes suivantes :

- mesure d'un courant circulant dans chacune des phases d'un stator de la machine tournante ;
- premier calcul, au moyen d'un unique régulateur proportionnel-intégral, d'un signal de commande de commutation pour la commande d'un onduleur, en fonction de chaque courant mesuré, et d'une valeur cible d'un couple mécanique fourni par la machine tournante ou d'une valeur cible d'une vitesse angulaire d'un rotor de la machine tournante par rapport au stator, l'onduleur étant configuré pour acheminer de l'énergie électrique entre une source continue d'énergie électrique et chaque phase du stator de la machine tournante ;
- commande de l'onduleur au moyen du signal de commande de commutation calculé.

En effet, un tel procédé, grâce au recours à un unique régulateur proportionnel intégral, réduit le couplage des grandeurs directes et en quadrature entre elles, ce qui se traduit par de moindres non-linéarités dans la commande, et autorise donc une commande de la machine tournante dans laquelle la tension maximale disponible est appliquée aux bornes de la machine tournante, sans que ne se posent de problèmes de manque de stabilité. Un tel procédé est donc apte à accroître le rendement de la machine tournante lors du défluxage.

Le procédé comporte de plus :

- le premier calcul comprend la détermination d'une consigne de tension en quadrature selon :

$$v_{q,ref} = K'_{p,q}(i_0 - i_{ref}) + K'_{i,q} \int_{t_0}^{t_f} (i_0 - i_{ref})dt$$

où $v_{q,ref}$ est la consigne de tension en quadrature ;

$K'_{p,q}$ et $K'_{i,q}$ sont des coefficients prédéterminés de l'unique correcteur proportionnel-intégral ;

$i_0$ est une grandeur définie comme $i_0 = \sqrt{i_q^2 + i_d^2}$ ;

$i_{ref}$ est une grandeur définie comme $i_{ref} = \sqrt{i_{q,ref}^2 + i_{d,ref}^2}$ ;

$t_0$ est un instant initial prédéterminé ;

$t_f$ est un instant final prédéterminé ultérieur à l'instant initial prédéterminé ;

$i_d$ et $i_q$ sont respectivement un courant direct mesuré et un courant en quadrature mesuré, dépendants de chaque courant mesuré ;

$i_{d,ref}$ et $i_{q,ref}$ sont respectivement une consigne de courant direct et une consigne de courant en quadrature, chacune représentative de la valeur cible du couple mécanique fourni par la machine tournante ou de la valeur cible de la vitesse angulaire du rotor de la machine tournante par rapport au stator ;

le signal de commande de commutation étant fonction de la consigne de tension en quadrature ;

- le premier calcul comprend, en outre, la détermination d'une consigne de tension directe selon :

$$v_{d,ref} = \sqrt{v_{lim}^2 - v_{q,ref}^2}$$

où $v_{d,ref}$ est la consigne de tension directe ;

$v_{lim}$ est une tension limite définie comme $v_{lim} = \alpha v_{DC}$;

$\alpha$ étant un indice de modulation prédéterminé de l'onduleur ;

le signal de commande de commutation étant, en outre, fonction de la consigne de tension directe ;

- l'indice de modulation présente une valeur comprise entre $1/\sqrt{3}$ et 1 ;
- les coefficients prédéterminés de l'unique correcteur proportionnel-intégral sont choisis de sorte que la valeur de la consigne de tension en quadrature déterminée soit bornée, de préférence inférieure ou égale à une tension limite définie comme : $v_{lim} = \alpha v_{DC}$

  où $v_{lim}$ est la tension limite ;

  $\alpha$ est un indice de modulation prédéterminé de l'onduleur ; et

  $v_{DC}$ est une tension entre la source et une référence de potentiel ;

- le premier calcul est mis en œuvre si une condition prédéterminée est vérifiée ;
- le procédé comprend la détermination d'une consigne de tension directe et d'une consigne de tension en quadrature dépendantes de chaque courant mesuré, la condition prédéterminée étant vérifiée si la somme des carrés de la consigne de tension directe et de la consigne de tension en quadrature est supérieure ou égale à une fraction prédéterminée du carré d'une tension limite prédéterminée, avantageusement supérieure ou égale à 75% du carré de la tension limite prédéterminée, par exemple supérieure ou égale à 90% du carré de la tension limite prédéterminée, ou encore égale au carré de la tension limite prédéterminée ;
- la consigne de tension directe et la consigne de tension en quadrature sont déterminées lors d'un deuxième calcul du signal de commande de commutation, distinct du premier calcul, la condition prédéterminée étant vérifiée si, durant la mise en œuvre du deuxième calcul, la somme des carrés de la consigne de tension directe et de la consigne de tension en quadrature devient supérieure ou égale à la fraction prédéterminée du carré d'une tension limite prédéterminée, ou encore égale au carré de la tension limite prédéterminée ;
- la condition prédéterminée est vérifiée si la vitesse angulaire du rotor de la machine tournante par rapport au stator est supérieure ou égale à une vitesse de base prédéterminée.

En outre, l'invention a pour objet un système de commande d'une machine tournante triphasée synchro-réluctante ou synchrone à aimants permanents, comportant :

- un capteur de courant configuré pour mesurer un courant circulant dans chacune des phases d'un stator de la machine tournante ;
- un onduleur configuré pour acheminer de l'énergie électrique entre une source continue d'énergie électrique et chaque phase du stator de la machine tournante ; et
- un calculateur configuré pour réaliser, par la mise en œuvre d'un unique régulateur proportionnel-intégral, un premier calcul d'un signal de commande de commutation pour la commande de l'onduleur, en fonction de chaque courant mesuré par le capteur de courant, et d'une grandeur représentative d'une valeur cible d'un couple mécanique fourni par la machine tournante ou d'une valeur cible d'une vitesse angulaire d'un rotor de la machine tournante par rapport au stator,

le calculateur étant, en outre, configuré pour appliquer, à l'onduleur, le signal de commande de commutation calculé, afin de commander l'onduleur.

Suivant un autre aspect avantageux de l'invention, le système de commande comporte la caractéristique suivante : le calculateur est configuré pour mettre en œuvre le procédé de commande tel que défini ci-dessus, à l'exception de l'étape de mesure.

## BRÈVE DESCRIPTION DES DESSINS

L'invention sera mieux comprise à l'aide de la description qui va suivre, donnée uniquement à titre d'exemple non limitatif et faite en se référant à l'unique dessin annexé, sur lequel :

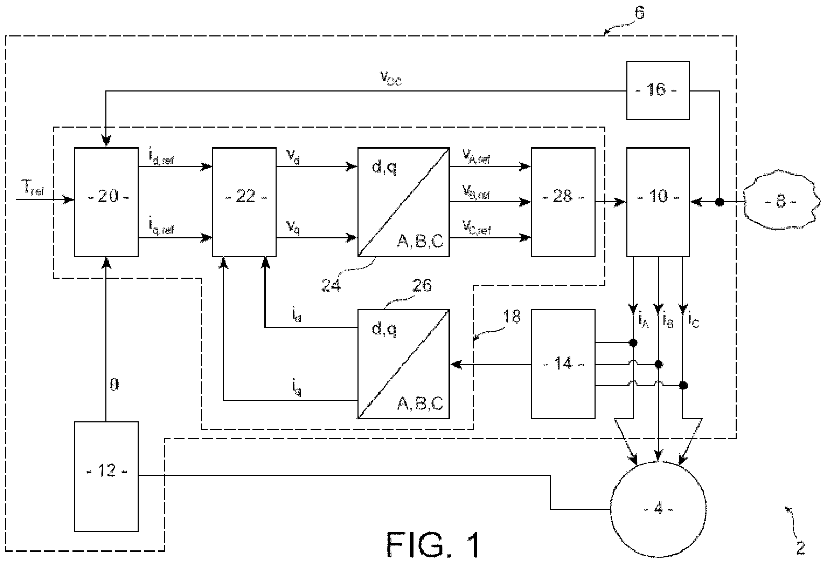

[Fig. 1] la figure 1 est une représentation schématique d'un système de commande selon l'invention associé à une machine tournante triphasée synchro-réluctante ou synchrone à aimants permanents.

## EXPOSÉ DÉTAILLÉ DE MODES DE RÉALISATION PARTICULIERS

Sur la figure 1 est représentée une installation 2 comprenant une machine tournante 4 associée, pour sa commande, à un système de commande 6 selon l'invention. L'installation 2 comporte également une source 8 d'énergie électrique, telle qu'un bus de tension continue.

La machine tournante 4 est une machine tournante triphasée, synchrone à aimants permanents ou synchro-réluctante, en particulier une machine tournante triphasée synchro-réluctante assistée d'aimants permanents.

La machine tournante 4 comporte trois entrées, désignées respectivement par les lettres A, B, C. Chaque entrée A, B, C correspond à une phase d'un stator de la machine tournante 4.

Par la suite, une grandeur se rapportant à une entrée donnée de la machine tournante 4 présentera, en indice, la lettre se rapportant à ladite entrée.

Le système de commande 6 est destiné à piloter, au cours du temps, l'alimentation de la machine tournante 4 en fonction de valeurs cibles et/ou de valeurs mesurées de grandeurs prédéterminées, qui seront décrites ultérieurement.

Le système de commande 6 comporte un onduleur 10, un capteur de position angulaire 12, un capteur de courant 14, un capteur de tension 16 et un calculateur 18.

L'onduleur 10 est configuré pour acheminer de l'énergie électrique entre la source 8 et la machine tournante 4. Plus précisément, l'onduleur 10 est configuré pour acheminer de l'énergie électrique entre la source 8 et chaque phase du stator de la machine tournante 4.

L'onduleur 10 comporte une première entrée reliée à la source 8, et trois sorties, chacune reliée à une phase correspondante du stator de la machine tournante 4. L'onduleur 10 comporte, en outre, une deuxième entrée électriquement reliée à une sortie du calculateur 18, de sorte que l'onduleur 10 est configuré pour acheminer de l'énergie électrique entre la source 8 et la machine tournante 4 en fonction d'un signal de commande de commutation appliqué par le calculateur 18 à la deuxième entrée de l'onduleur 10.

De préférence, le signal de commande de commutation est tel que l'onduleur 10 achemine de l'énergie électrique depuis la source 8 vers la machine tournante 4 de sorte que la machine tournante 4 présente un fonctionnement communément appelé « moteur ».

Le capteur de position angulaire 12 est configuré pour mesurer la position angulaire, notée $\theta$, d'un rotor (non représenté) de la machine tournante 4 par rapport au stator, et pour délivrer un signal de position angulaire représentatif de la valeur mesurée de la position angulaire $\theta$ du rotor de la machine tournante 4.

En outre, le capteur de position angulaire 12 est configuré pour appliquer le signal de position angulaire à une entrée correspondante du calculateur 18.

Le capteur de courant 14 est configuré pour mesurer l'intensité, notée $i_A$, $i_B$, $i_C$, du courant délivré par chacune des sorties de l'onduleur 10 et alimentant chaque phase correspondante du stator de la machine tournante 4. Le capteur de courant 14 est également configuré pour délivrer un signal d'intensité représentatif de la valeur mesurée de chaque intensité $i_A$, $i_B$, $i_C$.

En outre, le capteur de courant 14 est configuré pour appliquer le signal d'intensité à une entrée correspondante du calculateur 18.

Le capteur de tension 16 est configuré pour mesurer la tension, notée $v_{DC}$, entre la source 8 et une référence de potentiel, et pour délivrer un signal de tension représentatif de la valeur mesurée de la tension $v_{DC}$. En d'autres termes, le capteur de tension 16 est configuré pour mesurer la tension $v_{DC}$ entre la première entrée de l'onduleur 10 et la référence de potentiel.

En outre, le capteur de tension 16 est configuré pour appliquer le signal de tension à une entrée correspondante du calculateur 18.

Le calculateur 18 est configuré pour commander le fonctionnement de l'onduleur 10 suivant la valeur d'un couple cible $T_{ref}$ désiré en sortie de la machine tournante 4. Plus précisément, le calculateur 18 est configuré pour commander le fonctionnement de l'onduleur 10 en fonction du couple cible $T_{ref}$, et d'au moins un parmi le signal de position angulaire, le signal d'intensité et le signal de tension.

Le calculateur 18 comporte un organe 20 de calcul de consigne de courant, un organe 22 de commande de courant, un premier organe 24 de transformation, un deuxième organe 26 de transformation et un organe 28 de modulation de largeur d'impulsion.

Le deuxième organe de transformation 26 est configuré pour calculer un courant direct mesuré $i_d$ et un courant en quadrature mesuré $i_q$. En particulier, le deuxième organe de transformation 26 est configuré pour calculer le courant direct mesuré $i_d$ et le courant en quadrature mesuré $i_q$ à partir du signal d'intensité délivré par le capteur de courant 14.

Plus précisément, le deuxième organe de transformation 26 est configuré pour calculer le courant direct mesuré $i_d$ et le courant en quadrature mesuré $i_q$ en appliquant une transformation de Park aux intensités $i_A$, $i_B$, $i_C$ mesurées par le capteur de courant 14. Une telle transformation est réalisée en appliquant la relation (1) suivante :

$$\begin{pmatrix} i_d \\ i_q \end{pmatrix} = \begin{pmatrix} \cos\theta_e & \cos\left(\theta_e - \dfrac{2\pi}{3}\right) & \cos\left(\theta_e + \dfrac{2\pi}{3}\right) \\ -\sin\theta_e & -\sin\left(\theta_e - \dfrac{2\pi}{3}\right) & -\sin\left(\theta_e + \dfrac{2\pi}{3}\right) \end{pmatrix} \begin{pmatrix} i_A \\ i_B \\ i_C \end{pmatrix} \quad (1)$$

où $\theta_e$ est une position angulaire électrique du rotor par rapport au stator de la machine tournante 4, égale à $p\theta$, p étant le nombre de paires de pôles de la machine tournante 4.

Une telle transformation est destinée à simplifier la commande en se ramenant, depuis des grandeurs représentées par rapport aux trois enroulements fixes du stator, à des grandeurs virtuelles associées à seulement deux enroulements fictifs liés au rotor, en quadrature l'un par rapport à l'autre, et qui se déplacent à la même vitesse angulaire que le rotor. Par exemple, les courants portant les indices « d » et « q » correspondront aux courants circulant respectivement dans chacun des deux enroulements fictifs, tandis que les tensions portant les indices « d » et « q » correspondront à des tensions aux bornes de chacun des deux enroulements fictifs, respectivement.

L'organe 20 de calcul de consigne de courant est configuré pour calculer une consigne de courant direct $i_{d,ref}$ et une consigne de courant en quadrature $i_{q,ref}$.

La consigne de courant direct $i_{d,ref}$ et la consigne de courant en quadrature $i_{q,ref}$ sont des grandeurs représentatives de valeurs cibles pour les intensités $i_A$, $i_B$, $i_C$, c'est-à-dire de consignes pour les intensités $i_A$, $i_B$, $i_C$. Notamment, la consigne de courant direct $i_{d,ref}$ et la consigne de courant en quadrature $i_{q,ref}$ sont liées de façon univoque audites valeurs cibles des intensités $i_A$, $i_B$, $i_C$.

L'organe 20 de calcul de consigne de courant est configuré pour calculer la consigne de courant direct $i_{d,ref}$ et la consigne de courant en quadrature $i_{q,ref}$ en fonction du couple cible $T_{ref}$, du signal de position angulaire reçu en provenance du capteur de position angulaire 12 et du signal de tension reçu en provenance du capteur de tension 16.

Plus précisément, l'organe 20 de calcul de consigne de courant est configuré pour calculer la consigne de courant direct $i_{d,ref}$ et la consigne de courant en quadrature $i_{q,ref}$ de sorte que la consigne de courant direct $i_{d,ref}$ et la consigne de courant en quadrature $i_{q,ref}$ vérifient la relation (2) suivante :

$$T_{ref} = p\sqrt{\frac{3}{2}}\,\Phi i_{q,ref} + p\left(L_d - L_q\right)i_{d,ref}\,i_{q,ref} \quad (2)$$

où p est le nombre de paires de pôles de la machine tournante 4 ;

$L_d$ et $L_q$ sont les inductances de la machine tournante 4, respectivement dans les axes dits « direct » et « en quadrature » de la machine tournante ; et

et $\Phi$ est le flux des aimants permanents dans le repère tournant lié au rotor, et plus précisément dans un axe dit « axe direct » dudit repère tournant.

En outre, la consigne de courant direct $i_{d,ref}$ et la consigne de courant en quadrature $i_{q,ref}$ sont, par exemple, obtenues par mapping (cartographie) à partir d'abaques prédéterminées, ou encore par le biais d'une équation permettant de minimiser les pertes joules données par R( $i^2_{d,ref}$ + $i^2_{q,ref}$), R étant la résistance d'une phase de la machine tournante 4.

Les notions d'inductance dans l'axe direct $L_d$ et d'inductance dans l'axe en quadrature $L_q$, ainsi que la détermination de la valeur de telles inductances $L_d$, $L_q$, sont connues en soi. La valeur de telles inductances dépend généralement de la valeur de chacun du courant direct $i_d$ et du courant en quadrature $i_q$.

L'organe de commande de courant 22 est configuré pour calculer une consigne de tension directe $v_{d,ref}$ et une consigne de tension en quadrature $v_{q,ref}$.

La consigne de tension directe $v_{d,ref}$ et la consigne de tension en quadrature $v_{q,ref}$ sont des grandeurs représentatives de valeurs cibles pour les tensions $v_A$, $v_B$, $v_C$ au bornes des enroulements du stator, c'est-à-dire de consignes pour les tensions $v_A$, $v_B$, $v_C$. Notamment, la consigne de tension directe $v_{d,ref}$ et la consigne de tension en quadrature $v_{q,ref}$ sont liées de façon univoque auxdites valeurs cibles des tensions $v_A$, $v_B$, $v_C$.

En particulier, l'organe de commande de courant 22 est configuré pour déterminer la consigne de tension directe $v_{d,ref}$ et la consigne de tension en quadrature $v_{q,ref}$ en fonction de la consigne de courant direct $i_{d,ref}$ et de la consigne de courant en quadrature $i_{q,ref}$ calculés par l'organe 20 de calcul, ainsi qu'à partir du courant direct mesuré $i_d$ et du courant en quadrature mesuré $i_q$ précédemment décrits.

Plus précisément, l'organe de commande de courant 22 est configuré pour calculer la consigne de tension directe $v_{d,ref}$ et la consigne de tension en quadrature $v_{q,ref}$ suivant l'un ou l'autre parmi un premier mode de calcul et un deuxième mode de calcul, selon qu'une condition prédéterminée est remplie ou non.

Si la condition prédéterminée est remplie, l'organe de commande de courant 22 est configuré pour calculer la consigne de tension directe $v_{d,ref}$ et la consigne de tension en quadrature $v_{q,ref}$ selon le premier mode de calcul, en mettant en œuvre un unique correcteur proportionnel-intégral (encore appelé « régulateur proportionnel-intégral »). Dans ce cas, l'organe de commande de courant 22 est configuré pour calculer la consigne de tension directe $v_{d,ref}$ et la consigne de tension en quadrature $v_{q,ref}$ en mettant en œuvre les relations (3), (4) suivantes :

$$v_{q,ref} = K'_{p,q}(i_0 - i_{ref}) + K'_{i,q} \int_{t_0}^{t_f} (i_0 - i_{ref})dt \quad (3)$$

$$v_{d,ref} = \sqrt{v_{lim}^2 - v_{q,ref}^2} \quad (4)$$

où $K'_{p,q}$ et $K'_{i,q}$ sont deux coefficients prédéterminés du correcteur proportionnel-intégral associé, dans le premier mode de calcul, à la consigne de tension en quadrature ;

$i_0$ est une grandeur définie comme $i_0 = \sqrt{i_q^2 + i_d^2}$ ;

$i_{ref}$ est une grandeur définie comme $i_{ref} = \sqrt{i_{q,ref}^2 + i_{d,ref}^2}$ ;

$t_0$ est un instant initial prédéterminé ;

$t_f$ est un instant final prédéterminé ultérieur à l'instant initial prédéterminé, par exemple un instant courant ;

$v_{lim}$ est une tension limite définie comme $v_{lim} = \alpha v_{DC}$;

$\alpha$ étant l'indice de modulation de l'onduleur 10. L'indice de modulation $\alpha$ présente, de préférence, une valeur comprise entre $1/\sqrt{3}$ et 1.

La grandeur $i_0$ définie ci-dessus est la norme d'un vecteur (noté $i_0$) égal à la somme vectorielle, dans le repère tournant, du courant direct mesuré $i_d$ et du courant en quadrature mesuré $i_q$.

En outre, la grandeur $i_{ref}$ définie ci-dessus est la norme d'un vecteur (noté **$i_{ref}$**) égal à la somme vectorielle, dans le repère tournant, de la consigne de courant direct $i_{d,ref}$ et de la consigne de courant en quadrature $i_{q,ref}$.

Avantageusement, les coefficients $K'_{p,q}$ et $K'_{i,q}$ sont choisis de sorte que la valeur de la consigne de tension en quadrature $v_{q,ref}$ calculée au moyen de la relation (3) soit bornée, en particulier inférieure ou égale à la tension limite $v_{lim}$.

De préférence, la condition prédéterminée est vérifiée lorsque se produit une première situation dans la quantité $\left(v_{q,ref}^2 + v_{d,ref}^2\right)$ devient supérieure ou égale à une fraction prédéterminée de la quantité $v_{lim}^2$, avantageusement supérieure ou égale à $0{,}75.v_{lim}^2$, par exemple supérieure ou égale à $0{,}9.v_{lim}^2$, ou encore égale à $v_{lim}^2$.

A titre d'exemple, la condition prédéterminée est ainsi vérifiée lorsque, alors que l'organe de commande de courant 22 calcule la consigne de tension directe $v_{d,ref}$ et la consigne de tension en quadrature $v_{q,ref}$ selon le deuxième mode de calcul, la quantité $\left(v_{q,ref}^2 + v_{d,ref}^2\right)$ devient supérieure ou égale à une fraction prédéterminée de la quantité $v_{lim}^2$, avantageusement supérieure ou égale à $0{,}75.v_{lim}^2$, par exemple supérieure ou égale à $0{,}9.v_{lim}^2$, ou encore égale à $v_{lim}^2$.

En outre, si la condition prédéterminée n'est pas remplie, l'organe de commande de courant 22 est configuré pour calculer la consigne de tension directe $v_{d,ref}$ et la consigne de tension en quadrature $v_{q,ref}$, selon le deuxième mode de calcul, de préférence, en mettant en œuvre deux correcteurs de type « proportionnel-intégral ». Dans ce cas, l'organe de commande de courant 22 est configuré pour calculer la consigne de tension directe $v_{d,ref}$ et la consigne de tension en quadrature $v_{q,ref}$ en mettant en œuvre les relations (3) suivantes :

$$\begin{cases} v_{q,ref} = K_{p,q}\left(i_{q,ref} - i_q\right) + K_{i,q} \int_{t_0}^{t_f} \left(i_{q,ref} - i_q\right)dt \\ v_{d,ref} = K_{p,d}\left(i_{d,ref} - i_d\right) + K_{i,d} \int_{t_f}^{t} \left(i_{d,ref} - i_d\right)dt \end{cases} \quad (5)$$

où $K_{p,q}$ et $K_{i,q}$ sont deux coefficients prédéterminés du correcteur proportionnel-intégral associé, dans le deuxième mode de calcul, à la consigne de tension en quadrature, non nécessairement égaux aux coefficients $K'_{p,q}$ et $K'_{i,q}$ mentionnés précédemment ;

$K_{p,d}$ et $K_{i,d}$ sont deux coefficients prédéterminés du correcteur proportionnel-intégral associé, dans le deuxième mode de calcul, à la consigne de tension directe ;

$t_0$ est un instant initial prédéterminé ; et

$t_f$ est un instant final prédéterminé ultérieur à l'instant initial prédéterminé, par exemple un instant courant.

Il résulte de ce qui précède que le premier mode de calcul correspond à une situation où un défluxage de la machine est requis (et est mis en œuvre). La relation (5) assure que la machine tournante 4 fonctionne à puissance maximale. En outre, la relation (4) conduit au calcul d'une consigne de tension qui se traduira par une injection de courant dans les enroulements du stator conduisant à un défluxage de la machine tournante.

La composante en quadrature de la puissance consommée par la machine tournante 4 étant prédominante devant la composante directe, il est avantageux que la relation (4) soit mise en œuvre sur la tension en quadrature $v_{q,ref}$, afin que l'action du régulateur proportionnel-intégral soit optimale. Une autre raison pour laquelle il est avantageux que la relation (4) soit mise en œuvre sur la tension en quadrature et non pas sur la tension directe est que la valeur de la tension en quadrature est susceptible de changer de signe au cours du fonctionnement de la machine tournante 4, de sorte qu'il n'existe pas de bijection entre la tension directe et le vecteur $\mathbf{i_0}$.

La mise en œuvre d'un unique régulateur proportionnel-intégral assure une commande plus robuste de la machine tournante 4, ce qui se traduit par une plus grande stabilité du couple mécanique fourni par la machine tournante 4.

Le premier organe de transformation 24 est configuré pour calculer une première, une deuxième et une troisième consigne de tension de phase, respectivement $v_{A,ref}$, $v_{B,ref}$, $v_{C,ref}$. Chacune des consignes de tension de phase $v_{A,ref}$, $v_{B,ref}$, $v_{C,ref}$ correspond à une tension cible pour la phase correspondante $v_A$, $v_B$, $v_C$ du stator de la machine tournante 4.

Plus précisément, le premier organe de transformation 24 est configuré pour calculer les consignes de tension de phase $v_{A,ref}$, $v_{B,ref}$, $v_{C,ref}$ à partir de la consigne de tension directe $v_{d,ref}$ et la consigne de tension en quadrature $v_{q,ref}$ calculées par l'organe de commande de courant 22.

De préférence, le premier organe de transformation 24 est configuré pour calculer les consignes de tension de phase $v_{A,ref}$, $v_{B,ref}$, $v_{C,ref}$ en appliquant une transformation de Park inverse à la consigne de tension directe $v_{d,ref}$ et la consigne de tension en quadrature $v_{q,rer}$. Une telle transformation est mise en œuvre en appliquant la relation (6) suivante :

$$\begin{pmatrix} v_{A,ref} \\ v_{B,ref} \\ v_{C,ref} \end{pmatrix} = \begin{pmatrix} \cos\theta_e & -\sin\theta_e \\ \cos\left(\theta_e - \dfrac{2\pi}{3}\right) & -\sin\left(\theta_e - \dfrac{2\pi}{3}\right) \\ \cos\left(\theta_e + \dfrac{2\pi}{3}\right) & -\sin\left(\theta_e + \dfrac{2\pi}{3}\right) \end{pmatrix} \begin{pmatrix} v_{d,ref} \\ v_{q,ref} \end{pmatrix} \quad (6)$$

où, comme décrit précédemment, $\theta_e$ est la position angulaire électrique du rotor par rapport au stator de la machine tournante 4.

L'organe 28 de modulation de largeur d'impulsion est configuré pour générer le signal de commande de commutation à appliquer à l'onduleur 10. Plus précisément, l'organe 28 de modulation de largeur d'impulsion est configuré pour déterminer le signal de commande de commutation destiné à commander l'onduleur 10 de sorte que les tensions $v_A$, $v_B$, $v_C$ appliquées par l'onduleur 10 aux phases correspondantes A, B, C de la machine tournante 4 soient, idéalement, égales à la première, la deuxième et la troisième consigne de tension de phase $v_{A,ref}$, $v_{B,ref}$, $v_{C,ref}$ respectivement.

La détermination d'un signal de commande de commutation à partir de consignes de tension de phase quelconques est connue en soi.

Le fonctionnement du système de commande 6 va maintenant être décrit.

Le système de commande reçoit une valeur d'un couple cible $T_{ref}$ désiré en sortie de la machine tournante 4.

Au cours du temps, le capteur de position angulaire 12 mesure la position angulaire $\theta$ du rotor de la machine tournante 4 par rapport au stator, et délivre le signal de position angulaire.

En outre, au cours du temps, le capteur de courant 14 mesure l'intensité $i_A$, $i_B$, $i_C$ du courant alimentant dans chaque phase correspondante du stator de la machine tournante 4, et délivre le signal d'intensité.

En outre, au cours du temps, le capteur de tension 16 mesure la tension $v_{DC}$, et délivre le signal de tension.

Puis, à partir du couple cible $T_{ref}$, du signal de vitesse angulaire et du signal de tension, l'organe 20 de calcul de consigne de courant calcule la consigne de courant direct $i_{d,ref}$ et la consigne de courant en quadrature $i_{q,ref}$.

En outre, à partir du signal d'intensité, le deuxième organe de transformation 26 calcule le courant direct mesuré $i_d$ et le courant en quadrature mesuré $i_q$.

Puis, à partir de la consigne de courant direct $i_{d,ref}$, de la consigne de courant en quadrature $i_{q,ref}$, du courant direct mesuré $i_d$ et du courant en quadrature mesuré $i_q$, l'organe de commande de courant 22 calcule la consigne de tension directe $v_{d,ref}$ et la consigne de tension en quadrature $v_{q,ref}$.

Plus précisément, si la condition prédéterminée est remplie, l'organe de commande de courant 22 calcule la consigne de tension directe $v_{d,ref}$ et la consigne de tension en quadrature $v_{q,ref}$ selon le premier mode de calcul, qui met en œuvre un unique régulateur proportionnel-intégral.

Si la condition prédéterminée n'est pas remplie, l'organe de commande de courant 22 calcule la consigne de tension directe $v_{d,ref}$ et la consigne de tension en quadrature $v_{q,ref}$ selon le deuxième mode de calcul, qui met en œuvre, par exemple, deux régulateurs de type « proportionnel-intégral ».

Puis, le premier organe de transformation 24 calcule la première, la deuxième et la troisième consigne de tension de phase $v_{A,ref}$, $v_{B,ref}$, $v_{C,ref}$.

Puis, l'organe 28 de modulation de largeur d'impulsion génère le signal de commande de commutation afin de commander l'onduleur 10 de sorte que les tensions $v_A$, $v_B$, $v_C$ appliquées par l'onduleur 10 aux phases correspondantes A, B, C de la machine tournante 4 soient égales à la première, la deuxième et la troisième consigne de tension de phase $v_{A,ref}$, $v_{B,ref}$, $v_{C,ref}$ respectivement.

Selon une variante de l'invention, le deuxième organe de transformation 26 est configuré pour appliquer d'abord une transformation de Clarke aux intensités $i_A$, $i_B$, $i_C$, puis une transformation de Park au résultat obtenu, en vue d'obtenir le courant direct mesuré $i_d$ et le courant en quadrature mesuré $i_q$. La transformation de Clarke est connue en soi.

Selon une autre variante, la tension limite $v_{lim}$ représente seulement une fraction de la quantité $\alpha.v_{DC}$, avantageusement au moins $0,5.\alpha.v_{DC}$, de préférence au moins $0,75.\alpha.v_{DC}$, par exemple au moins $0,9.\alpha.v_{DC}$.

Selon une autre variante, la condition prédéterminée est vérifiée lorsque se produit une deuxième situation dans laquelle une vitesse angulaire $\omega$ du rotor, égale à la dérivée par rapport au temps de la position angulaire $\theta$ du rotor, est supérieure ou égale à une vitesse de base $\omega_b$ prédéterminée.

Selon une autre variante, la condition prédéterminée est vérifiée lorsque se produit l'une ou l'autre de la première situation ou de la deuxième situation précédemment décrites.

Selon une autre variante, l'organe de commande de courant 22 est configuré pour calculer la consigne de tension directe $v_{d,ref}$ et la consigne de tension en quadrature $v_{q,ref}$ selon le premier mode de calcul uniquement, en tout temps et sans vérification de la réalisation d'une quelconque condition.

Selon une autre variante, le calculateur 18 est configuré pour commander le fonctionnement de l'onduleur 10 en fonction, non pas du couple cible $T_{ref}$, mais d'une vitesse de rotation cible $\omega_{ref}$ du rotor de la machine tournante 4. Dans ce cas, le calculateur 18 comporte, en outre, un organe de conversion (non représenté) configuré pour convertir la vitesse de rotation cible $\omega_{ref}$ en le couple cible $T_{ref}$ à fournir à l'organe 20 de calcul de courant cible. En particulier, l'organe de conversion est configuré pour convertir la vitesse de rotation cible $\omega_{ref}$ en le couple cible $T_{ref}$ à partir du signal de vitesse angulaire issu du capteur de vitesse angulaire 12, en mettant en œuvre la relation (7) suivante :

$$T_{ref} = G_p(\omega_{ref}\text{-}\omega) + G_i \int_{t_0}^{t_f} (\omega_{ref}\text{-}\omega)dt \quad (7)$$

où $G_p$ et $G_i$ sont deux coefficients prédéterminés ;
$t_0$ est un instant initial prédéterminé ; et
$t_f$ est un instant final prédéterminé ultérieur à l'instant initial prédéterminé, par exemple un instant courant.

Le procédé et le système selon l'invention sont particulièrement avantageux. En effet, grâce au recours à un unique régulateur proportionnel intégral, le procédé selon l'invention réduit le couplage des grandeurs directes et en quadrature entre elles, ce qui se traduit par de moindres non-linéarités dans la commande, et autorise donc une commande de la machine tournante dans laquelle la tension maximale disponible est appliquée aux bornes de la machine tournante, sans que ne se posent de problèmes de manque de stabilité. Un tel procédé est donc apte à accroître le rendement de la machine tournante lors du défluxage.

En outre, le procédé et le système selon l'invention exploitent des relations linéaires pour la mise en œuvre de la commande : la commande prend en compte un écart entre le courant $i_0$ consommé par la machine tournante 4 et la consigne de courant $i_{ref}$ pour déterminer la consigne de tension en quadrature $v_{q,ref}$, suivant une relation linéaire (et ce, sans contrainte préalable sur la valeur de la consigne de tension en quadrature $v_{q,ref}$). Il en résulte une stabilité accrue par rapport aux procédés de commande classiques. Par exemple, il en résulte une stabilité accrue par rapport à certains procédés de commande classiques dans lesquels, par exemple, la grandeur commandée est un angle, dans le référentiel tournant, de la tension aux bornes de la machine tournante 4. La relation entre un tel angle et le courant consommé par la machine tournante 4 n'étant pas linéaire, un tel procédé classique offre des performances moins satisfaisantes que le procédé selon l'invention, notamment en termes de stabilité.

Le procédé et le système selon l'invention autorisent également une surveillance de l'angle formé entre les directions respectives du flux magnétique des aimants du rotor et des courants, dans le repère tournant lié au rotor. De cette façon, il est possible de commander l'onduleur de façon à maintenir la valeur dudit angle en dessous d'un angle prédéterminé et ce, par exemple pour empêcher le basculement de la machine d'un fonctionnement dit « moteur », dans lequel la machine tournante absorbe de l'énergie et délivre un couple mécanique, à un fonctionnement dit « génératrice », dans lequel la machine tournante convertit de l'énergie mécanique au rotor en énergie électrique.

**Revendications**

1.   Procédé de commande d'une machine tournante (4) triphasée synchro-réluctante ou synchrone à aimants permanents, comportant les étapes suivantes :

- mesure d'un courant ($i_A$, $i_B$, $i_C$) circulant dans chacune des phases d'un stator de la machine tournante (4) ;
- premier calcul, au moyen d'un unique régulateur proportionnel-intégral, d'un signal de commande de commutation pour la commande d'un onduleur (10), en fonction de chaque courant ($i_A$, $i_B$, $i_C$) mesuré, et d'une valeur cible ($T_{ref}$) d'un couple mécanique fourni par la machine tournante (4) ou d'une valeur cible d'une vitesse angulaire d'un rotor de la machine tournante (4) par rapport au stator, l'onduleur (10) étant configuré pour acheminer de l'énergie électrique entre une source (8) continue d'énergie électrique et chaque phase du stator de la machine tournante (4), **caractérisé en ce que** le premier calcul comprenant la détermination d'une consigne de tension en quadrature ($v_{q,ref}$) selon :

$$v_{q,ref} = K'_{p,q}(i_0 - i_{ref}) + K'_{i,q} \int_{t_0}^{t_f} (i_0 - i_{ref})dt$$

où $v_{q,ref}$ est la consigne de tension en quadrature ;
$K'_{p,q}$ et $K'_{i,q}$ sont des coefficients prédéterminés de l'unique correcteur proportionnel-intégral ;
$i_0$ est une grandeur définie comme $i_0 = \sqrt{i_q^2 + i_d^2}$ ;
$i_{ref}$ est une grandeur définie comme $i_{ref} = \sqrt{i_{q,ref}^2 + i_{d,ref}^2}$ ;
$t_0$ est un instant initial prédéterminé ;
$t_f$ est un instant final prédéterminé ultérieur à l'instant initial prédéterminé ;
$i_d$ et $i_q$ sont respectivement un courant direct mesuré et un courant en quadrature mesuré, dépendants de chaque courant mesuré ;
$i_{d,ref}$ et $i_{q,ref}$ sont respectivement une consigne de courant direct et une consigne de courant en quadrature, chacune représentative de la valeur cible ($T_{ref}$) du couple mécanique fourni par la machine tournante ou de la valeur cible ($\omega_{ref}$) de la vitesse angulaire du rotor de la machine tournante (4) par rapport au stator, le premier calcul comprenant, en outre, la détermination d'une consigne de tension directe ($v_{d,ref}$) selon :

$$v_{d,ref} = \sqrt{v_{lim}^2 - v_{q,ref}^2}$$

où $v_{d,ref}$ est la consigne de tension directe ;
$v_{lim}$ est une tension limite définie comme $v_{lim} = \alpha v_{DC}$ ;
$\alpha$ étant un indice de modulation prédéterminé de l'onduleur (10) ;
le signal de commande de commutation étant fonction de la consigne de tension en quadrature ($v_{q,ref}$) et de la consigne de tension directe ($v_{d,ref}$) ;

- commande de l'onduleur (10) au moyen du signal de commande de commutation calculé.

2.   Procédé de commande selon la revendication 1, dans lequel l'indice de modulation présente une valeur comprise entre $1/\sqrt{3}$ et 1.

**3.** Procédé de commande selon l'une quelconque des revendications 1 à 2, dans lequel les coefficients prédéterminés de l'unique correcteur proportionnel-intégral sont choisis de sorte que la valeur de la consigne de tension en quadrature ($v_{q,ref}$) déterminée soit bornée, de préférence inférieure ou égale à une tension limite définie comme :

$v_{lim} = \alpha v_{DC}$

où $v_{lim}$ est la tension limite;
$\alpha$ est un indice de modulation prédéterminé de l'onduleur (10) ; et
$v_{DC}$ est une tension entre la source (8) et une référence de potentiel.

**4.** Procédé de commande selon l'une quelconque des revendications 1 à 3, dans lequel le premier calcul est mis en œuvre si une condition prédéterminée est vérifiée.

**5.** Procédé de commande selon la revendication 4, comprenant la détermination d'une consigne de tension directe ($v_{d,ref}$) et d'une consigne de tension en quadrature ($v_{q,ref}$) dépendantes de chaque courant ($i_A$, $i_B$, $i_C$) mesuré,
la condition prédéterminée étant vérifiée si la somme des carrés de la consigne de tension directe ($v_{d,ref}$) et de la consigne de tension en quadrature ($v_{q,ref}$) est supérieure ou égale à une fraction prédéterminée du carré d'une tension limite prédéterminée, avantageusement supérieure ou égale à 75% du carré de la tension limite prédéterminée, par exemple supérieure ou égale à 90% du carré de la tension limite prédéterminée, ou encore égale au carré de la tension limite prédéterminée.

**6.** Procédé de commande selon la revendication 5, dans lequel la consigne de tension directe ($v_{d,ref}$) et la consigne de tension en quadrature ($v_{q,ref}$) sont déterminées lors d'un deuxième calcul du signal de commande de commutation, distinct du premier calcul,
la condition prédéterminée étant vérifiée si, durant la mise en œuvre du deuxième calcul, la somme des carrés de la consigne de tension directe ($v_{d,ref}$) et de la consigne de tension en quadrature ($v_{q,ref}$) devient supérieure ou égale à la fraction prédéterminée du carré d'une tension limite prédéterminée, ou encore égale au carré de la tension limite prédéterminée.

**7.** Procédé de commande selon l'une quelconque des revendications 4 à 6, dans lequel la condition prédéterminée est vérifiée si la vitesse angulaire du rotor de la machine tournante (4) par rapport au stator est supérieure ou égale à une vitesse de base prédéterminée.

**8.** Système de commande (6) d'une machine tournante (4) triphasée synchro-réluctante ou synchrone à aimants permanents, comportant :

- un capteur de courant (14) configuré pour mesurer un courant ($i_A$, $i_B$, $i_C$) circulant dans chacune des phases d'un stator de la machine tournante (4) ;
- un onduleur (10) configuré pour acheminer de l'énergie électrique entre une source (8) continue d'énergie électrique et chaque phase du stator de la machine tournante (4) ; et
- un calculateur (18) configuré pour réaliser, par la mise en œuvre d'un unique régulateur proportionnel-intégral, un premier calcul d'un signal de commande de commutation pour la commande de l'onduleur (10), en fonction de chaque courant ($i_A$, $i_B$, $i_C$) mesuré par le capteur de courant (14), et d'une grandeur représentative d'une valeur cible ($T_{ref}$) d'un couple mécanique fourni par la machine tournante ou d'une valeur cible d'une vitesse angulaire d'un rotor de la machine tournante par rapport au stator, **caractérisé en ce que** le premier calcul comprenant la détermination d'une consigne de tension en quadrature ($v_{q,ref}$) selon :

$$v_{q,ref} = K'_{p,q}(i_0 - i_{ref}) + K'_{i,q}\int_{t_0}^{t_f}(i_0 - i_{ref})dt$$

où $v_{q,ref}$ est la consigne de tension en quadrature ;
$K'_{p,q}$ et $K'_{i,q}$ sont des coefficients prédéterminés de l'unique correcteur proportionnel-intégral ;

$i_0$ est une grandeur définie comme $i_0 = \sqrt{i_q^2 + i_d^2}$ ;

$$i_{ref} = \sqrt{i_{q,ref}^2 + i_{d,ref}^2}$$

$i_{ref}$ est une grandeur définie comme $i_{ref} = \sqrt{i_{q,ref}^2 + i_{d,ref}^2}$ ;

$t_0$ est un instant initial prédéterminé ;

$t_f$ est un instant final prédéterminé ultérieur à l'instant initial prédéterminé ;

$i_d$ et $i_q$ sont respectivement un courant direct mesuré et un courant en quadrature mesuré, dépendants de chaque courant mesuré ;

$i_{d,ref}$ et $i_{q,ref}$ sont respectivement une consigne de courant direct et une consigne de courant en quadrature, chacune représentative de la valeur cible ($T_{ref}$) du couple mécanique fourni par la machine tournante ou de la valeur cible ($\omega_{ref}$) de la vitesse angulaire du rotor de la machine tournante (4) par rapport au stator ;

le premier calcul comprenant, en outre, la détermination d'une consigne de tension directe ($v_{d,ref}$) selon :

$$v_{d,ref} = \sqrt{v_{lim}^2 - v_{q,ref}^2}$$

où $v_{d,ref}$ est la consigne de tension directe ;

$v_{lim}$ est une tension limite définie comme $v_{lim} = \alpha v_{DC}$;

$\alpha$ étant un indice de modulation prédéterminé de l'onduleur (10)

le calculateur (18) étant, en outre, configuré pour appliquer, à l'onduleur (10), le signal de commande de commutation calculé, afin de commander l'onduleur (10).

9. Système de commande (6) selon la revendication 8, dans lequel le calculateur (18) est configuré pour mettre en œuvre le procédé de commande selon l'une quelconque des revendications 1 à 7, à l'exception de l'étape de mesure.

**Patentansprüche**

1. Steuerverfahren zum Steuern einer drehenden dreiphasigen Synchro-Reluktanzmaschine (4) oder Permanentmagnet-Synchronmaschine, umfassend die folgenden Schritte:

- Messen eines Stroms ($i_A$, $i_B$, $i_C$), der in jeder der Phasen eines Stators der drehenden Maschine (4) fließt;
- erste Berechnung, mittels eines einzigen Proportional-Integral-Reglers, eines Schaltsteuersignals zum Steuern eines Wechselrichters (10) in Abhängigkeit von jedem gemessenen Strom ($i_A$, $i_B$, $i_C$) und eines Zielwerts ($T_{ref}$) eines von der drehenden Maschine (4) abgegebenen mechanischen Drehmoments oder eines Zielwerts einer Winkelgeschwindigkeit eines Rotors der drehenden Maschine (4) in Bezug auf den Stator, wobei der Wechselrichter (10) dazu ausgestaltet ist, elektrische Energie zwischen einer Gleichstrom-Energiequelle (8) und jeder Phase des Stators der drehenden Maschine (4) zu transportieren, **dadurch gekennzeichnet, dass** die erste Berechnung das Bestimmen eines Quadraturspannungssollwerts ($v_{q,ref}$) umfasst gemäß:

$$v_{q,ref} = K'_{p,q}(i_0 - i_{ref}) + K'_{i,q} \int_{t_0}^{t_f} (i_0 - i_{ref})dt$$

worin $v_{q,ref}$ der Quadraturspannungssollwert ist;

$K'_{p,q}$ und $K'_{i,q}$ vorbestimmte Koeffizienten des einzigen Proportional-Integral-Korrektors sind;

$i_0$ eine als $i_0 = \sqrt{i_q^2 + i_d^2}$ definierte Größe ist;

$i_{ref}$ eine als $i_{ref} = \sqrt{i_{q,ref}^2 + i_{d,ref}^2}$ definierte Größe ist;

$t_0$ ein vorbestimmter Anfangszeitpunkt ist;

$t_f$ ein vorbestimmter Endzeitpunkt später als der vorbestimmte Anfangszeitpunkt ist;

$i_d$ und $i_q$ ein gemessener Direktstrom beziehungsweise ein gemessener Quadraturstrom sind, die von jedem gemessenen Strom abhängen;

$i_{d,ref}$ und $i_{q,ref}$ ein Direktstromsollwert beziehungsweise ein Quadraturstromsollwert sind, von denen jeder repräsentativ für den Zielwert ($T_{ref}$) des von der drehenden Maschine abgegebenen mechanischen Drehmoments oder für den Zielwert ($\omega_{ref}$) der Winkelgeschwindigkeit des Rotors der drehenden Maschine (4) in Bezug auf den Stator ist, wobei die erste Berechnung ferner das Bestimmen eines Direktspannungssollwerts ($v_{d,ref}$) umfasst gemäß:

$$v_{d,ref} = \sqrt{v_{lim}^2 - v_{q,ref}^2}$$

worin $v_{d,ref}$ der Direktspannungssollwert ist;
$v_{lim}$ eine Grenzspannung ist, die als $v_{lim} = \alpha v_{DC}$ definiert ist;
wobei $\alpha$ ein vorbestimmter Modulationsindex des Wechselrichters (10) ist;
wobei das Schaltsteuersignal von dem Quadraturspannungssollwert ($v_{q,ref}$) und von dem Direktspannungssollwert ($v_{d,ref}$) abhängig ist;

- Steuern des Wechselrichters (10) mittels des berechneten Schaltsteuersignals.

2.  Steuerverfahren nach Anspruch 1, wobei der Modulationsindex einen Wert zwischen $1/\sqrt{3}$ und 1 aufweist.

3.  Steuerverfahren nach einem der Ansprüche 1 bis 2, wobei die vorbestimmten Koeffizienten des einzigen Proportional-Integral-Korrektors so ausgewählt sind, dass der Wert des bestimmten Quadraturspannungssollwerts ($v_{q,ref}$) beschränkt ist, bevorzugt kleiner als oder gleich einer Grenzspannung ist, die definiert ist als: $v_{lim} = \alpha v_{DC}$

worin $v_{lim}$ die Grenzspannung ist;
$\alpha$ ein vorbestimmter Modulationsindex des Wechselrichters (10) ist; und
$v_{DC}$ eine Spannung zwischen der Quelle (8) und einer Potentialreferenz ist.

4.  Steuerverfahren nach einem der Ansprüche 1 bis 3, wobei die erste Berechnung eingesetzt wird, wenn eine vorbestimmte Bedingung erfüllt ist.

5.  Steuerverfahren nach Anspruch 4, umfassend das Bestimmen eines Direktspannungssollwerts ($v_{d,ref}$) und eines Quadraturspannungssollwerts ($v_{q,ref}$), die von jedem gemessenen Strom ($i_A$, $i_B$, $i_C$) abhängen, wobei die vorbestimmte Bedingung erfüllt ist, wenn die Summe der Quadrate des Direktspannungssollwerts ($v_{d,ref}$) und des Quadraturspannungssollwerts ($v_{q,ref}$) größer als oder gleich einem vorbestimmten Bruchteil des Quadrats einer vorbestimmten Grenzspannung ist, vorteilhafterweise größer als oder gleich 75 % des Quadrats der vorbestimmten Grenzspannung ist, zum Beispiel größer als oder gleich 90 % des Quadrats der vorbestimmten Grenzspannung ist oder aber gleich dem Quadrat der vorbestimmten Grenzspannung ist.

6.  Steuerverfahren nach Anspruch 5, wobei der Direktspannungssollwert ($v_{d,ref}$) und der Quadraturspannungssollwert ($v_{q,ref}$) bei einer zweiten Berechnung des Schaltsteuersignals bestimmt werden, die von der ersten Berechnung verschieden ist, wobei die vorbestimmte Bedingung erfüllt ist, wenn, während des Einsatzes der zweiten Berechnung, die Summe der Quadrate des Direktspannungssollwerts ($v_{d,ref}$) und des Quadraturspannungssollwerts ($v_{q,ref}$) größer als oder gleich dem vorbestimmten Bruchteil des Quadrats einer vorbestimmten Grenzspannung oder aber gleich dem Quadrat der vorbestimmten Grenzspannung wird.

7.  Steuerverfahren nach einem der Ansprüche 4 bis 6, wobei die vorbestimmte Bedingung erfüllt ist, wenn die Winkelgeschwindigkeit des Rotors der drehenden Maschine (4) in Bezug auf den Stator größer als oder gleich einer vorbestimmten Basisgeschwindigkeit ist.

8.  Steuersystem (6) zum Steuern einer drehenden dreiphasigen Synchro-Reluktanzmaschine (4) oder Permanentmagnet-Synchronmaschine, umfassend:

- einen Stromsensor (14), der dazu ausgestaltet ist, einen Strom ($i_A$, $i_B$, $i_C$) zu messen, der in jeder der Phasen eines Stators der drehenden Maschine (4) fließt;
- einen Wechselrichter (10), der dazu ausgestaltet ist, elektrische Energie zwischen einer Gleichstrom-Energiequelle (8) und jeder Phase des Stators der drehenden Maschine (4) zu transportieren; und
- einen Rechner (18), der dazu ausgestaltet ist, durch den Einsatz eines einzigen Proportional-Integral-Reglers eine erste Berechnung eines Schaltsteuersignals zum Steuern des Wechselrichters (10) in Abhängigkeit von jedem von dem Stromsensor (14) gemessenen Strom ($i_A$, $i_B$, $i_C$) und einer Größe, die repräsentativ für einen Zielwert ($T_{ref}$) eines von der drehenden Maschine abgegebenen mechanischen Drehmoments oder für einen Zielwert einer Winkelgeschwindigkeit eines Rotors der drehenden Maschine in Bezug auf den Stator ist, auszuführen, **dadurch gekennzeichnet, dass**

die erste Berechnung das Bestimmen eines Quadraturspannungssollwerts ($v_{q,ref}$) umfasst gemäß:

$$v_{q,ref} = K'_{p,q}(i_0 - i_{ref}) + K'_{i,q} \int_{t_0}^{t_f} (i_0 - i_{ref})dt$$

worin $v_{q,ref}$ der Quadraturspannungssollwert ist;
$K'_{p,q}$ und $K'_{i,q}$ vorbestimmte Koeffizienten des einzigen Proportional-Integral-Korrektors sind;

$i_0$ eine als $i_0 = \sqrt{i_q^2 + i_d^2}$ definierte Größe ist;

$i_{ref}$ eine als $i_{ref} = \sqrt{i_{q,ref}^2 + i_{d,ref}^2}$ definierte Größe ist;

$t_0$ ein vorbestimmter Anfangszeitpunkt ist;
$t_f$ ein vorbestimmter Endzeitpunkt später als der vorbestimmte Anfangszeitpunkt ist;
$i_d$ und $i_q$ ein gemessener Direktstrom beziehungsweise ein gemessener Quadraturstrom sind, die von jedem gemessenen Strom abhängen;
$i_{d,ref}$ und $i_{q,ref}$ ein Direktstromsollwert beziehungsweise ein Quadraturstromsollwert sind, von denen jeder repräsentativ für den Zielwert ($T_{ref}$) des von der drehenden Maschine abgegebenen mechanischen Drehmoments oder für den Zielwert ($\omega_{ref}$) der Winkelgeschwindigkeit des Rotors der drehenden Maschine (4) in Bezug auf den Stator ist;
wobei die erste Berechnung ferner das Bestimmen eines Direktspannungssollwerts ($v_{d,ref}$) umfasst gemäß:

$$v_{d,ref} = \sqrt{v_{lim}^2 - v_{q,ref}^2}$$

worin $v_{d,ref}$ der Direktspannungssollwert ist;
$v_{lim}$ eine Grenzspannung ist, die als $v_{lim} = \alpha v_{DC}$ definiert ist;
wobei $\alpha$ ein vorbestimmter Modulationsindex des Wechselrichters (10) ist
wobei der Rechner (18) ferner dazu ausgestaltet ist, auf den Wechselrichter (10) das berechnete Schaltsteuersignal anzuwenden, um den Wechselrichter (10) zu steuern.

9. Steuersystem (6) nach Anspruch 8, wobei der Rechner (18) dazu ausgestaltet ist, das Steuerverfahren nach einem der Ansprüche 1 bis 7, mit Ausnahme des Schritts des Messens, einzusetzen.

**Claims**

1. Method for controlling a permanent-magnet synchro-reluctant or synchronous three-phase rotating machine (4), comprising the following steps:

- measuring a current ($i_A$, $i_B$, $i_C$) flowing in each of the phases of a stator of the rotating machine (4);
- carrying out a first calculation, by way of a single proportional-integral controller, of a switching control signal for controlling an inverter (10), as a function of each measured current ($i_A$, $i_B$, $i_C$) and a target value ($T_{ref}$) for a mechanical torque supplied by the rotating machine (4) or a target value for an angular velocity of a rotor of the rotating machine (4) with respect to the stator, the inverter (10) being configured to convey electrical energy between a DC electrical energy source (8) and each phase of the stator of the rotating machine (4), **characterized in that** the first calculation comprises determining a quadrature voltage setpoint ($v_{q,ref}$) according to:

$$v_{q,ref} = K'_{p,q}(i_0 - i_{ref}) + K'_{i,q} \int_{t_0}^{t_f} (i_0 - i_{ref})dt$$

where $v_{q,ref}$ is the quadrature voltage setpoint;
$K'_{p,q}$ and $K'_{i,q}$ are predetermined coefficients of the single proportional-integral corrector;

$i_0$ is a quantity defined as $i_0 = \sqrt{i_q^2 + i_d^2}$ ;

$i_{ref}$ is a quantity defined as $i_{ref} = \sqrt{i_{q,ref}^2 + i_{d,ref}^2}$ ;

$t_0$ is a predetermined initial time;
$t_f$ is a predetermined final time subsequent to the predetermined initial time;
$i_d$ and $i_q$ are respectively a measured direct current and a measured quadrature current, dependent on each measured current;
$i_{d,ref}$ and $i_{q,ref}$ are respectively a direct current setpoint and a quadrature current setpoint, each representative of the target value ($T_{ref}$) for the mechanical torque supplied by the rotating machine or of the target value ($\omega_{ref}$) for the angular velocity of the rotor of the rotating machine (4) with respect to the stator, the first calculation furthermore comprising determining a direct voltage setpoint ($v_{d,ref}$) according to:

$$v_{d,ref} = \sqrt{v_{lim}^2 - v_{q,ref}^2}$$

where $v_{d,ref}$ is the direct voltage setpoint;
$v_{lim}$ is a limit voltage defined as $v_{lim} = \alpha v_{DC}$;
$\alpha$ being a predetermined modulation index of the inverter (10);
the switching control signal being a function of the quadrature voltage setpoint ($v_{q,ref}$) and of the direct voltage setpoint ($v_{d,ref}$);

- controlling the inverter (10) by way of the calculated switching control signal.

2. Control method according to Claim 1, wherein the modulation index has a value between $1/\sqrt{3}$ and 1.

3. Control method according to either one of Claims 1 and 2, wherein the predetermined coefficients of the single proportional-integral corrector are chosen so that the value of the determined quadrature voltage setpoint ($v_{q,ref}$) is limited, preferably less than or equal to a limit voltage defined as: $v_{lim} = \alpha v_{DC}$

where $v_{lim}$ is the limit voltage;
$\alpha$ is a predetermined modulation index of the inverter (10); and
$v_{DC}$ is a voltage between the source (8) and a potential reference.

4. Control method according to any one of Claims 1 to 3, wherein the first calculation is implemented if a predetermined condition is satisfied.

5. Control method according to Claim 4, comprising determining a direct voltage setpoint ($v_{d,ref}$) and a quadrature voltage setpoint ($v_{q,ref}$) that are dependent on each measured current ($i_A$, $i_B$, $i_C$),
the predetermined condition being satisfied if the sum of the squares of the direct voltage setpoint ($v_{d,ref}$) and of the quadrature voltage setpoint ($v_{q,ref}$) is greater than or equal to a predetermined fraction of the square of a predetermined limit voltage, advantageously greater than or equal to 75% of the square of the predetermined limit voltage, for example greater than or equal to 90% of the square of the predetermined limit voltage, or else equal to the square of the predetermined limit voltage.

6. Control method according to Claim 5, wherein the direct voltage setpoint ($v_{d,ref}$) and the quadrature voltage setpoint ($v_{q,ref}$) are determined when carrying out a second calculation of the switching control signal, separate from the first calculation,

the predetermined condition being satisfied if, during the implementation of the second calculation, the sum of the squares of the direct voltage setpoint ($v_{d,ref}$) and of the quadrature voltage setpoint ($v_{q,ref}$) becomes greater than or equal to the predetermined fraction of the square of a predetermined limit voltage, or else equal to the square of the predetermined limit voltage.

7.  Control method according to any one of Claims 4 to 6, wherein the predetermined condition is satisfied if the angular velocity of the rotor of the rotating machine (4) with respect to the stator is greater than or equal to a predetermined base speed.

8.  Control system (6) for a permanent-magnet synchro-reluctant or synchronous three-phase rotating machine (4), comprising:

    - a current sensor (14) configured to measure a current ($i_A$, $i_B$, $i_C$) flowing in each of the phases of a stator of the rotating machine (4);
    - an inverter (10) configured to convey electrical energy between a DC electrical energy source (8) and each phase of the stator of the rotating machine (4); and
    - a computer (18) configured to carry out, by implementing a single proportional-integral controller, a first calculation of a switching control signal for controlling the inverter (10), as a function of each current ($i_A$, $i_B$, $i_C$) measured by the current sensor (14) and a quantity representative of a target value ($T_{ref}$) for a mechanical torque supplied by the rotating machine or a target value for an angular velocity of a rotor of the rotating machine with respect to the stator, **characterized in that**

    the first calculation comprises determining a quadrature voltage setpoint ($v_{q,ref}$) according to:

    $$v_{q,ref} = K'_{p,q}(i_0 - i_{ref}) + K'_{i,q} \int_{t_0}^{t_f} (i_0 - i_{ref})dt$$

    where $v_{q,ref}$ is the quadrature voltage setpoint;
    $K'_{p,q}$ and $K'_{i,q}$ are predetermined coefficients of the single proportional-integral corrector;

    $i_0$ is a quantity defined as $i_0 = \sqrt{i_q^2 + i_d^2}$ ;

    $i_{ref}$ is a quantity defined as $i_{ref} = \sqrt{i_{q,ref}^2 + i_{d,ref}^2}$ ;

    $t_0$ is a predetermined initial time;
    $t_f$ is a predetermined final time subsequent to the predetermined initial time;
    $i_d$ and $i_q$ are respectively a measured direct current and a measured quadrature current, dependent on each measured current;
    $i_{d,ref}$ and $i_{q,ref}$ are respectively a direct current setpoint and a quadrature current setpoint, each representative of the target value ($T_{ref}$) for the mechanical torque supplied by the rotating machine or of the target value ($\omega_{ref}$) for the angular velocity of the rotor of the rotating machine (4) with respect to the stator;
    the first calculation furthermore comprising determining a direct voltage setpoint ($v_{d,ref}$) according to:

    $$v_{d,ref} = \sqrt{v_{lim}^2 - v_{q,ref}^2}$$

    where $v_{d,ref}$ is the direct voltage setpoint;
    $v_{lim}$ is a limit voltage defined as $v_{lim} = \alpha v_{DC}$;
    $\alpha$ being a predetermined modulation index of the inverter (10),
    the computer (18) furthermore being configured to apply the calculated switching control signal to the inverter (10) in order to control the inverter (10).

9.  Control system (6) according to Claim 8, wherein the computer (18) is configured to implement the control method according to any one of Claims 1 to 7, except for the measuring step.

FIG. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051296 A1
- FR 2994355 A1
- WO 03084049 A1

- EP 1868288 A1
- US 20160359442 A1
- FR 3012270 A1